# EUROPÄISCHE PATENTSCHRIFT

(11) **EP 4 070 653 B1**
(45) Veröffentlichungstag und Bekanntmachung des Hinweises auf die Patenterteilung: **10.07.2024**
(21) Anmeldenummer: 22000089.7
(22) Anmeldetag: 28.03.2022
(51) Int. Cl.: A01K 5/01

(54) **HÖHENVERSTELLBARE AUFNAHMEVORRICHTUNGEN FÜR TIERNAHRUNG**
HEIGHT-ADJUSTABLE ANIMAL FEED HOLDER DEVICES
DISPOSITIFS DE RÉCEPTION DE NOURRITURE POUR ANIMAUX RÉGLABLES EN HAUTEUR

(30) Priorität: 01.04.2021 DE 102021001707
(43) Veröffentlichungstag der Anmeldung: 12.10.2022
(73) Patentinhaber: Oberstadt, Marcel, 59423 Unna (DE)
(72) Erfinder: Oberstadt, Marcel, 59423 Unna (DE)
(74) Vertreter: Schneider, Uwe

(56) Entgegenhaltungen:
- DE-A1- 102017 010 448
- US-A- 5 054 431
- US-A1- 2006 288 946
- US-A1- 2010 147 224
- US-A1- 2016 316 715

## Beschreibung

Die Erfindung betrifft eine höhenverstellbare Aufnahmevorrichtungen für Tiernahrung gemäß Oberbegriff des Anspruches 1 oder 2.

Im Stand der Technik gibt es verschiedene höhenverstellbare Aufnahmevorrichtungen für Tiernahrung, insbesondere mit Aufnahmen für Futternäpfe. So offenbaren beispielsweise die DE 20 2011 106 605 U1 und die DE 20 2007 015 436 U1 Aufnahmevorrichtungen, die in verschiedenen Höhen an einer Halterung angebracht werden können, erlauben aber keine Höhenverstellung ohne Teildemontage, beispielsweise zur Befüllung eines Napfes.

Die DE 20 2008 011 664 U1 und die DE 73 19 61 9 U ermöglichen es, die Aufnahmen von Hand entlang einer Halterung zu verschieben und zu arretieren, was eine Erleichterung bezüglich Bedienbarkeit und Befüllung darstellt. Jedoch erfordern sie zwangsweise eine Bedienung durch den Nutzer auf der eingestellten Höhe, was durch die übliche Positionierung der Futteraufnahmen in Bodennähe insbesondere für Nutzer mit körperlichen Einschränkungen nachteilig ist.

Komfortablere Lösungen offenbaren die US 2015/0313176 A1 und die WO 2020/092867 A1, die höhenverstellbare Aufnahmevorrichtungen zeigen, bei denen die Futteraufnahmen mittels Elektromotoren in der Höhe verfahren werden können. So kann die Aufnahmevorrichtung beispielsweise zur Befüllung der Fressnäpfe oder dgl. Futterbehälter in die Höhe gefahren und abschließend zur Fütterung eines Tiers wieder abgesenkt werden. Diese Lösungen haben aufgrund ihrer Komplexität neben hohen Fertigungs- und Wartungskosten insbesondere den Nachteil, dass ein elektrischer Anschluss in der Nähe der Aufnahmevorrichtung vorhanden sein muss, was insbesondere bezüglich der Flexibilität des Aufstellortes nachteilig ist.

Aus der US-PS 5 054 431 ist eine höhenverstellbare Aufnahmevorrichtung für Futternäpfe bekannt, die die Futternäpfe mittels mechanisch oder elektrisch als Kurbeltrieb ausgebildeter Betätigungseinrichtungen verstellen. Die Bedienung ist zeitraubend und erfordert ggf. eine elektrische Versorgung der Aufnahmevorrichtung. Aufgabe der vorliegenden Erfindung ist es daher, eine Aufnahmevorrichtung zu schaffen, welche eine einfach zu bedienende und zeitsparende Höhenverstellung ermöglicht und dabei die genannten Nachteile vermeidet.

Die Lösung der erfindungsgemäßen Aufgabe ergibt sich aus den kennzeichnenden Merkmalen des Anspruches 1 oder des Anspruchs 2 in Zusammenwirken mit den Merkmalen des jeweiligen Oberbegriffes. Weitere vorteilhafte Ausgestaltungen der Erfindung ergeben sich aus den jeweiligen Unteransprüchen.

Die Erfindung gemäß dem unabhängigen Anspruch 2 umfasst eine höhenverstellbare Aufnahmevorrichtung für Tiernahrung, insbesondere zur Aufnahme von Behältern für Tiernahrung, umfassend einen Träger, einen an dem Träger vertikal verstellbaren Schlitten mit zumindest einem Halter für Tiernahrung in einem Napf, einer Flasche oder dgl., mechanische Verstellmittel zum Bewegen des Schlittens entlang des Trägers. Eine derartige gattungsgemäße Aufnahmevorrichtung wird dadurch weiter entwickelt, dass eine Betätigung der mechanischen Verstellmittel entlang eines Verstellwegs in eine erste Verstellrichtung ein Bewegen des Schlittens in eine erste Richtung entlang eines Verfahrwegs an dem Träger bewirkt, und eine Betätigung der mechanischen Verstellmittel entlang des Verstellwegs in eine zweite Verste'llrichtung ein Bewegen des Schlittens in eine zweite Richtung entlang des Verfahrwegs an dem Träger bewirkt, wobei zwischen Verstellmittel und Schlitten wirkende Übertragungsmittel dabei jeweils den Verfahrweg des Schlittens relativ zum Verstellweg der Verstellmittel verlängern.

Eine solche Aufnahmevorrichtung ermöglicht es dem Nutzer, in einfacher Weise die Höhe des Halters zu verstellen, vorzugsweise ohne sich dabei zum Halter hinunter beugen zu müssen. So kann beispielsweise ein in dem Halter aufgenommener Napf zur Reinigung und Befüllung aus einer bodennahen Position in eine Befüllposition gebracht werden, die es erlaubt, den Napf zu reinigen und zu befüllen. Dies erleichtert es insbesondere Nutzern mit körperlichen Einschränkungen ihr Haustier, zu versorgen. Darüber hinaus verbessert eine solche Lösung den Bedienkomfort der Aufnahmevorrichtung, der Nutzer kann durch Einwirken auf die mechanischen Verstellmittel den Schlitten in einfacher Weise verstellen, wodurch eine Vielzahl an Nutzungsmöglichkeiten besteht. Der einfache Mechanismus ermöglicht weiterhin eine kostensparende und haltbare Konstruktion aus wenigen Teilen.

Dabei bezieht sich Begriff vertikal auf die Änderung der Höhenlage des Schlittens relativ zum Träger. Je nach Anordnung des Trägers kann dies einer vertikalen Bewegung im Raum entsprechen, kann aber auch nur einer annähernd senkrechten oder schräg vertikalen Bewegung entsprechen. Der Schlitten umfasst dabei beispielsweise zwei Halter zur Aufnahme jeweils eines Napfes, die auf zwei gegenüberliegenden Seiten des Trägers angeordnet sind. Der Verfahrweg hat dabei beispielsweise mehr als die doppelte Länge des Verstellwegs der mechanischen Verstellmittel.

Von besonderem Vorteil an dieser Ausgestaltung ist dabei das Vorsehen der Übertragungsmittel, die eine Verlängerung des Verfahrweges des Schlittens mit dem Futter relativ zu dem Verstellweg der Verstellmittel ermöglicht. Bildlich gesprochen muß der Bediener der Aufnahmevorrichtung nur eine recht kurze und optimalerweise für ihn bequem ausführbare Verstellung der Verstellmittel vornehmen, um eine deutlich längere Verfahrbewegung des Schlittens zu bewirken. So kann der Verstellbereich der Verstellmittel z.B. per Hand griffgünstig im oberen Bereich der Aufnahmevorrichtung liegen und kurz genug sein, um durch den möglicherweise körperlich eingeschränkten Bediener bequem ausgeführt zu werden, d.h. ohne z.B. ein Bücken oder sonstige größere Körperverlagerungen oder derartige Bewegungen zu erfordern. Diese kurze und bequem ausführbare Verstellbewegung der Verstellmittel wird aber den Schlitten trotzdem von der oberen, bequem von dem Benutzer bedienbaren Position in einer untere, für das Tier passende Fütterungsposition überführen, indem die Übertragungsmittel die Verstellbewegung der Verstellmittel in eine längere Verfahrbewegung des Schlittens übersetzen. Dies gilt natürlich ebenfalls für die umgekehrte Bewegung aus der für das Tier passenden Fütterungsposition des Schlittens in die für den Benutzer griffgünstig obere Position.

Gemäß einer weiteren bevorzugten Ausführungsform der Erfindung bewegt die Betätigung der Verstellmittel in die erste Verstellrichtung den Schlitten in eine erste Position entlang des Trägers, vorzugsweise in eine vertikal obere Endposition an dem Träger und die Betätigung der Verstellmittel in die zweite Verstellrichtung bewegt den Schlitten entlang des Trägers in eine zweite Position, vorzugsweise in eine vertikal untere Endposition an dem Träger. Die Endpositionen können dabei den Enden des Trägers entsprechen. Weiter entspricht die untere Endposition beispielsweise einer einem Haustier zugänglichen Höhe, während die obere Endposition beispielsweise einer dem Haustier nicht zugänglichen Höhe entspricht. Dies erlaubt es beispielsweise, dem Tier nur zu den Fütterungszeiten einen Zugang zur Nahrung zu ermöglichen und/oder es davon abzuhalten, den Nutzer bei der Vorbereitung der Fütterung zu stören.

Gemäß einer weiteren bevorzugten Ausführungsform der Erfindung sind die Verstellmittel durch eine von einer Bedienperson aufbringbare mechanische Verstellkraft beaufschlagbar, die den Schlitten in die erste und/oder die zweite Richtung entlang des Verfahrwegs an dem Träger bewegt. Eine solche mechanische Verstellkraft, die die mechanischen Verstellmittel verstellt, erlaubt einen Betrieb der Aufnahmevorrichtung ohne eine sonstige Energiequelle und damit eine flexiblere Nutzung der Aufnahmevorrichtung. Die mechanische Verstellkraft wird dabei vorzugsweise manuell mittels einer Hand und/oder eines Fußes des Nutzers auf die Verstellmittel aufgegeben. Je nach Ausführungsform bleibt die zur Verstellung der Verstellmittel benötigte Verstellkraft dabei beispielsweise über den gesamten Verstellweg gleich, nimmt ab, oder nimmt zu. Weiter vorzugsweise wird die Kraft je nach Richtung des Verstellwegs in entgegengesetzte Richtungen auf die Verstellmittel beaufschlagt, also z.B. für eine Hubbewegung des Schlittens von unten nach oben und für ein Absenken des Schlittens von oben nach unten.

Die Erfindung umfasst gemäß Anspruch 1 nach einer weiteren Lösung der Aufgabe eine höhenverstellbare Aufnahmevorrichtung für Tiernahrung, insbesondere zur Aufnahme von Behältern für Tiernahrung, umfassend einen Träger, einen an dem Träger vertikal verstellbaren Schlitten mit zumindest einem Halter für Tiernahrung in einem Napf, einer Flasche oder dgl., mechanische Verstellmittel zum Bewegen des Schlittens entlang des Trägers. Eine derartige gattungsgemäße Aufnahmevorrichtung wird dadurch in erfindungsgemäßer Weise weiter entwickelt, dass eine Betätigung der mechanischen Verstellmittel entlang eines Verstellwegs ein Bewegen des Schlittens in eine erste Richtung entlang eines Verfahrwegs an dem Träger bewirkt, wobei zwischen Verstellmittel und Schlitten wirkende Übertragungsmittel dabei den Verfahrweg des Schlittens relativ zum Verstellweg der Verstellmittel verlängern, und die Aufnahmevorrichtung Gegenkraftmittel zum Bewegen des Schlittens entlang des Trägers aufweist, durch die der Schlitten in eine zweite Richtung entgegengesetzt zu der ersten Richtung aufgrund der Betätigung der Verstellmittel bewegbar ist.

Diese erfindungsgemäße Lösung ermöglicht gegenüber der zuvor beschriebenen Lösung gemäß Anspruch 2 eine automatisierte Rückstellung des Schlittens nach der Bedienung durch den Nutzer. Dies vereinfacht die Bedienung und erhöht den Bedienungskomfort. Die Gegenkraftmittel können dabei in verschiedenster Weise auf den Schlitten wirken, siehe dazu die weiteren bevorzugten Ausführungsformen. Die Gegenkraftmittel vereinfachen gerade für körperlich eingeschränkte Personen die Benutzung der Aufnahmevorrichtung weiter, da die Verstellmittel der Aufnahmevorrichtung nur noch in eine, vorzugsweise gut und bequem betätigbare Bewegungsrichtung, z.B. von oben nach unten, betätigt werden müssen und die möglicherweise für körperlich eingeschränkte Personen schwieriger auszuführende Rückbewegung des Schlittens durch die Wirkung der Gegenkraftmittel ausgeführt werden. Die Eigenschaften der zuvor beschriebenen Lösung gemäß Anspruch 2 gelten sinngemäß weitgehend auch für diese erfindungsgemäße Lösung, daher wird auf die vorstehenden Ausführungen Bezug genommen.

Gemäß einer weiteren bevorzugten Ausführungsform bewegen die Gegenkraftmittel den Schlitten in eine erste Position entlang des Trägers, vorzugsweise in eine vertikal obere Endposition an dem Träger und die Betätigung der mechanischen Verstellmittel bewegt den Schlitten entlang des Trägers in eine zweite Position, vorzugsweise in eine vertikal untere Endposition an dem Träger. Die Endpositionen können dabei den Enden des Trägers entsprechen. Weiter entspricht die untere Endposition beispielsweise einer einem Haustier zugänglichen Höhe, während die obere Endposition beispielsweise einer dem Haustier nicht zugänglichen Höhe entspricht. Gleichzeitig ist diese obere Endposition für den Bediener besonders bequem zum Auswechseln der Tröge oder dgl. Behälter und zu deren Reinigung.

Gemäß einer weiteren bevorzugten Ausführungsform sind die Verstellmittel durch eine von einer Bedienperson aufbringbare mechanische Verstellkraft beaufschlagbar, die den Schlitten in die erste Richtung entlang des Verfahrwegs an dem Träger bewegt. Eine solche mechanische Verstellkraft, die die mechanischen Verstellmittel verstellt, erlaubt einen Betrieb der Aufnahmevorrichtung ohne eine sonstige Energiequelle und damit eine flexiblere Nutzung der Aufnahmevorrichtung. Die mechanische Verstellkraft wird dabei vorzugsweise manuell mittels einer Hand und/oder eines Fußes des Nutzers auf die Verstellmittel aufgebracht. Je nach Ausführungsform bleibt die zur Verstellung der Verstellmittel benötigte Verstellkraft dabei beispielsweise über den gesamten Verstellweg gleich, nimmt ab, oder nimmt zu. Weiter vorzugsweise wird die Kraft je nach Richtung des Verstellwegs in entgegengesetzte Richtungen auf die Verstellmittel beaufschlagt.

Gemäß einer weiteren bevorzugten Ausführungsform stellt die Verstellkraft auf die mechanischen Verstellmittel bei der Bewegung des Schlittens in die erste Richtung entlang des Verfahrwegs gleichzeitig die Energie für die Gegenkraftmittel bereit, die anschließend zum Bewegen des Schlittens entlang des Trägers in die Gegenrichtung durch die Gegenkraftmittel nutzbar ist. Durch eine solche Ausführungsform beaufschlagt der Nutzer die Verstellmittel neben der Verstellkraft zusätzlich mit Energie, die als eine Art potenzielle Energie von den Gegenkraftmitteln aufgenommen, gespeichert und bei Bedarf zur Bewegung des Schlittens in die zweite Richtung abgegeben wird. Dies ermöglicht eine automatisierte Gegenbewegung in die zweite Richtung ohne weitere vom Nutzer aufzubringende Kraft. Dies verbessert weiter den Bedienkomfort und ermöglicht verschiedene Nutzungsmöglichkeiten. So kann beispielsweise die Gegenbewegung automatisiert nach Nutzung erfolgen, zum Beispiel bedient der Nutzer die Verstellmittel, bewegt damit den Schlitten in eine obere Position am Träger und die Gegenkraftmittel bewegen den Schlitten in eine untere Position am Träger, sobald der Nutzer keine Kraft mehr auf die Verstellmittel ausübt. Ebenso ist es natürlich denkbar, dass die Gegenkraftmittel den Schlitten in die obere Position an dem Träger bringen und der Nutzer die Verstellung des Schlittens in die untere Position kraftbetätigt.

Gemäß einer weiteren bevorzugten Ausführungsform weisen die Gegenkraftmittel einen Gegenkraftmittelweg auf, der dem Verstellweg der Verstellmittel entspricht, und die Übertragungsmittel verlängern den Verfahrweg des Schlittens relativ zum Gegenkraftmittelweg, wenn der Schlitten in die Gegenrichtung bewegt wird. Dabei entspricht der Gegenkraftmittelweg beispielsweise dem Verstellweg der Verstellmittel in die entgegengesetzte Richtung. Dies ermöglicht es, die für die Gegenkraftmittel benötigte Gegenkraft alleine durch die Bewegung der Verstellmittel bereitzustellen und damit die benötigte potentielle Energie auf die Gegenkraftmittel aufzubringen. Die Verstellmittel können dabei beispielsweise direkt oder weiter beispielsweise über Antriebsmittel auf die Gegenkraftmittel wirken. Darüber hinaus kann die Länge des Verfahrwegs in die zweite Richtung, also die durch die Gegenkraftmittel gesteuerte Bewegung, damit der Länge des Verfahrwegs in die erste Richtung, also die durch die Verstellmittel gesteuerte Bewegung, entsprechen, wenn beide in gleichartiger Weise über die Verlängerungsmittel verlängert werden.

Gemäß einer anderen Ausgestaltung weisen die Gegenkraftmittel einen Gegenkraftweg auf, der dem Verstellweg des Schlittens entspricht. In einer solche Ausführungsform wird die erforderliche potenzielle Energie beispielsweise über den Schlitten - genauer über die Bewegung des Schlittens - in die erste Richtung auf die Gegenkraftmittel aufgebracht. Bei Bewegung des Schlittens durch die Gegenkraftmittel in die zweite Richtung wirken diese beispielsweise direkt auf den Schlitten und nicht zwingend über die Verlängerungsmittel.

Gemäß einer bevorzugten Ausgestaltung umfassen die Gegenkraftmittel Federmittel und/oder Gewichte. Federmittel werden dabei durch Bewegung des Schlittens in die erste Richtung und/oder durch die Verstellung der Verstellmittel entlang des Verstellwegs vorgespannt. Dies erzeugt quasi eine potenzielle Energie, durch welche die Gegenkraftmittel den Schlitten in die zweite Richtung bewegen können. Die Federmittel können dabei beispielsweise Gasdruckfedern, Gaszugfedern und/oder mechanische Federn wie z.B. Spiralfedern umfassen. Eine bevorzugte Ausführungsform der Gegenkraftmittel und ihre genaue Anordnung wird dabei in den Figuren genauer beschrieben. Weiter können die Gegenkraftmittel dabei beispielsweise Gewichte umfassen, welche auf die Antriebsmittel und/oder den Schlitten wirken und deren potenzielle Energie durch Raumlageänderung von einem oder mehreren Gewichten durch Bewegung des Schlittens in die erste Richtung oder durch die Verstellung der Verstellmittel entlang des Verstellwegs bereitgestellt wird. Beispielsweise wird ein Gewicht bei der Verstellung der Verstellmittel und/oder die Bewegung des Schlittens in seiner Raumlage angehoben und kann somit beim Absinken den Schlitten wieder in die Gegenrichtung bewegen.

Gemäß einer weiteren bevorzugten Ausführungsform wirken die Verstellmittel und/oder die Gegenkraftmittel über ein biegsames Antriebselement und zumindest eine von dem biegsamen Antriebselement umgreifbare Umlenkeinheit, insbesondere einer Umlenkrolle, auf den Schlitten. Dies ermöglicht eine kompakte Bauform der Aufnahmevorrichtung und einen Verstellweg und/oder Gegenkraftweg, der beispielsweise entgegengesetzt zum Verfahrweg ist. Dies ist insbesondere von Vorteil, wenn die Beaufschlagung der Verstellmittel mit der Verstellkraft in eine Verstellrichtung und damit die Bewegung des Schlittens in eine Richtung einfacher ist. Die Bewegung des Schlittens in die entgegengesetzte Richtung wird dabei durch die Gegenkraftmittel über das Antriebselement und die Umlenkeinheit bewirkt. Die von dem Antriebselement umgreifbare Umlenkeinheit ist dabei beispielsweise an einem Ende des Trägers angeordnet. Weiterhin umfasst die Ausführungsform beispielsweise mehrere Umlenkrollen, die flaschenzugartig angeordnet sind und es ermöglichen, den Schlitten mit sehr geringem, auf die Verstellmittel oder durch die Gegenkraftmittel ausgeübten, mechanischem Kraftaufwand entlang des Verfahrwegs zu verfahren. Gemäß einer weiteren Ausgestaltung weist das biegsame Antriebselement ein Seil, eine Kette, einen Riemen oder dgl. auf.

Gemäß einer weiteren Ausgestaltung sind die Übertragungsmittel flaschenzugartig ausgebildet und umfassen eine Mehrzahl an Umlenkrollen, um die das Antriebselement herum verläuft. Dies ermöglicht die Verlängerung des Verfahrwegs des Schlittens relativ zum Verstellweg der Verstellmittel. Ein kleiner Verstellweg vereinfacht die Bedienung der Vorrichtung und ein langer Verfahrweg ermöglicht eine vereinfachte Befüllung und Reinigung der Halter in einer hohen oberen Endposition, die für den Benutzer günstig angeordnet ist. Die Übertragungsmittel umfassen dabei beispielsweise sechs Umlenkrollen, um die das Antriebselement läuft und so den Verfahrweg verlängern, vorzugsweise sind die Umlenkrollen dabei als Faktorenflaschenzug angeordnet und ausgeführt, wodurch neben der Wegverlängerung auch ein geringer benötigter Kraftaufwand erreicht wird. Dabei können die Übertragungsmittel das Umlenkmittel umfassen. Der Verfahrweg kann durch die Übertragungsmittel beispielsweise um mehr als das Doppelte im Vergleich zum Verstellweg verlängert werden.

Gemäß einer weiteren bevorzugten Ausführungsform umfassen die Verstellmittel ein Fußpedal und/oder einen, vorzugsweise per Hand, betätigbaren Hebel. Ein Fußpedal ermöglicht es dem Nutzer, die Verstellmittel ohne Hände zu betätigen, so können damit beispielsweise vorbereitete Tiernahrungshalter gehalten werden. Der vorzugsweise per Hand betätigbare Hebel ist dabei beispielsweise am oberen Ende des Trägers angeordnet und erlaubt dadurch eine Bedienung durch einen Nutzer, ohne, dass dieser sich bücken muss.

Weiter können die Verstellmittel beispielsweise eine absenkbare Druckplatte beinhalten. Dies erlaubt es dem Nutzer, die Verstellmittel zu betätigen und den Schlitten zu verfahren, indem der Nutzer sich zumindest teilweise auf die Druckplatte stellt und diese absenkt. Sobald die Druckplatte entlastet wird, verfahren die Gegenkraftmittel den Schlitten wieder in die entgegengesetzte Richtung. Auch kann somit eine Bedienung der Vorrichtung durch ein Tier erfolgen, dieses kann sich zur Futteraufnahme auf die Druckplatte stellen und damit die Verstellmittel betätigen. Dies ist insbesondere von Vorteil, wenn die Bedienung der Verstellmittel den Schlitten in eine untere Position am Träger verfährt. Eine solche Ausführungsform erlaubt es beispielsweise ein Tier mit einem definierten Mindestgewicht über die Vorrichtung zu füttern, während andere, leichtere Tiere diese nicht bedienen können.

Gemäß einer weiteren Ausgestaltung stellen die Verriegelungsmittel den Schlitten in zumindest einer Position fest, vorzugsweise indem die Verriegelungsmittel auf die Verstellmittel einwirken. Die Position kann dabei beispielsweise die vertikal untere Endposition an dem Träger sein. Die Verriegelungsmittel können beispielsweise als Federstifte ausgeführt sein, welche die Verstellmittel in zumindest einer Position feststellen und wobei die Feststellung durch eine vorbestimmte, auf die Verstellmittel in zumindest einer Richtung des Verstellwegs ausgeübte Kraft aufgehoben werden kann.

Weiter können die Verriegelungsmittel zumindest einen Riegel oder Schnapper umfassen, welcher die Verstellmittel in zumindest einer Position feststellt. Dabei entspricht diese Position bevorzugt einer Position, in welcher sich der Schlitten nach Bewegung durch die Verstellmittel in die erste Richtung befindet. So ausgeführte Verriegelungsmittel setzen den Schlitten in dieser Position fest, bis er wieder freigegeben wird. Dann erst erfolgt die Bewegung des Schlittens durch die Gegenkraftmittel in die zweite Richtung. Beispielsweise entspricht die erste Richtung dabei einer Bewegung des Schlittens in eine untere vertikale Endposition am Träger und die untere vertikale Endposition entspricht der Position, in welcher der Schlitten durch die Verriegelungsmittel festgestellt wird. Beispielsweise kann ein Riegel oder Schnapper ein Fußpedal in einer unteren Endposition feststellen.

Gemäß einer weiteren Ausgestaltung sind die Verstellmittel und/oder die Gegenkraftmittel und/oder die Übertragungsmittel zumindest teilweise im Inneren des Trägers angeordnet. Dies verhindert eine Beschädigung oder Verschmutzung dieser Mittel und ermöglicht eine optisch ansprechende Ausführungsform. Dabei können die Verstellmittel beispielsweise derart angeordnet sein, dass zumindest der auf das Antriebselement wirkende Teil im Träger angeordnet ist und zumindest der vom Nutzer greifbare Teil außerhalb des Trägers angeordnet ist.

Gemäß einer weiteren Ausgestaltung der Erfindung kann die Aufnahmevorrichtung weiterhin Bremsmittel zur Abbremsung des Schlittens umfassen. Diese sind derart ausgeführt, den Schlitten entweder während seiner Bewegung dauerhaft abzubremsen und/oder um den Schlitten kurz vor dem Erreichen zumindest einer Position abzubremsen und so eine zu schnelle Bewegung und/oder ein zu abruptes Abstoppen zu verhindern. Die Positionen entsprechend dabei beispielsweise der vertikalen oberen Endposition und/oder der vertikalen unteren Endposition des Schlittens am Träger. Die Bremsmittel können dabei beispielsweise als Reibungsbremse, Gasdruckdämpfer öder dergleichen ausgeführt sein. Die Bremsmittel können weiterhin beispielsweise auf den Schlitten, das Antriebselement, die Verstellmittel, die Umlenkmittel, die Verlängerungsmittel, die Gegenkraftmittel oder eine beliebige Kombination dieser wirken.

Gemäß einer weiteren Ausgestaltung der Erfindung kann der Träger an einem Boden und/oder einer Bodenplatte und/oder einer Wand und/oder einer Wandhalterung befestigt.

Gemäß einer weiteren Ausgestaltung der Erfindung ist der Schlitten mittels zumindest zwei Laufrollen oder dgl. Führungselementen am Träger verfahrbar. Bevorzugt ist der Schlitten mittels vier Laufrollen am Träger verfahrbar, die paarweise an gegenüberliegenden Längsseiten des Trägers angeordnet sind. Dies verbessert die Laufruhe und verringert den Widerstand des Schlittens am Träger, wodurch für ein Bewegen des Schlittens weniger Kraft benötigt wird.

Gemäß einer weiteren Ausführungsform der Erfindung kann der Träger einen Profilstab oder ein Profilrohr aufweisen. Vorzugsweise ist der Träger ein Vierkantrohr. Dies ermöglicht eine hohe Stabilität des Trägers und erlaubt eine Anordnung von Teilen der Aufnahmevorrichtung im Profilinneren. Beispielsweise umfasst der Träger ein Vierkantrohr mit abgeflachten Kanten, die so gleichzeitig als Laufflächen für den Schlitten dienen können.

Bei der Erfindung können die verschiedenen Ausführungsformen, soweit technisch möglich, in beliebiger Weise miteinander kombiniert werden und sind nicht auf ihre jeweiligen Merkmale beschränkt.

Eine besonders bevorzugte Ausführungsform der Aufnahmevorrichtung erfindungsgemäßen zeigt die Zeichnung.

Es zeigen:
- Figur 1: - eine seitliche Ansicht einer ersten bevorzugten Ausführungsform der erfindungsgemäßen Aufnahmevorrichtung mit einem auf einer Bodenplatte angeordneten Träger und einem Schlitten mit Halterungen in einer ersten Position,
- Figur 2a, 2b: - seitliche Ansichten der Ausführungsform gemäß Figur 1, bei der die äußeren Teile der Vorrichtung nicht dargestellt sind und zur besseren Darstellung in Figur 2a Teile der Vorrichtung im Stil einer Explosionszeichnung abgebildet sind,
- Figur 3: - eine seitliche Ansicht der Ausführungsform gemäß Figur 1 mit dem Schlitten in einer zweiten Position,
- Figur 4a, 4b: - einen Längsschnitt durch einen Ausschnitt der Ausführungsform gemäß Figur 2b mit einem Antriebselement,
- Figur 5: - eine seitliche Ansicht einer zweiten bevorzugten Ausführungsform der Erfindung, ähnlich der in Figur 1 dargestellten Ausführungsform, bei der zur besseren Darstellung Teile der Vorrichtung im Stil einer Explosionszeichnung abgebildet sind,
- Figur 6: - eine seitliche Ansicht einer dritten bevorzugten Ausführungsform der Erfindung mit einem über eine Wandhalterung befestigten Träger und einem Schlitten mit Halterungen in einer ersten Position,
- Figur 7a, 7b: - zwei Ansichten einer anderen Ausführungsform der Erfindung, ähnlich der in Figur 1 dargestellten Ausführungsform, bei der eine Betätigung der Aufnahmevorrichtung über ein Hebelsystem erfolgt,
- Figur 8: - eine explosionsartige geschnittene Darstellung der Ausführungsform gemäß Figur 7,
- Figur 9a, 9b: - eine vergrößerte Darstellung der beweglichen Anteile der Aufnahmevorrichtung in zwei Ansichten.

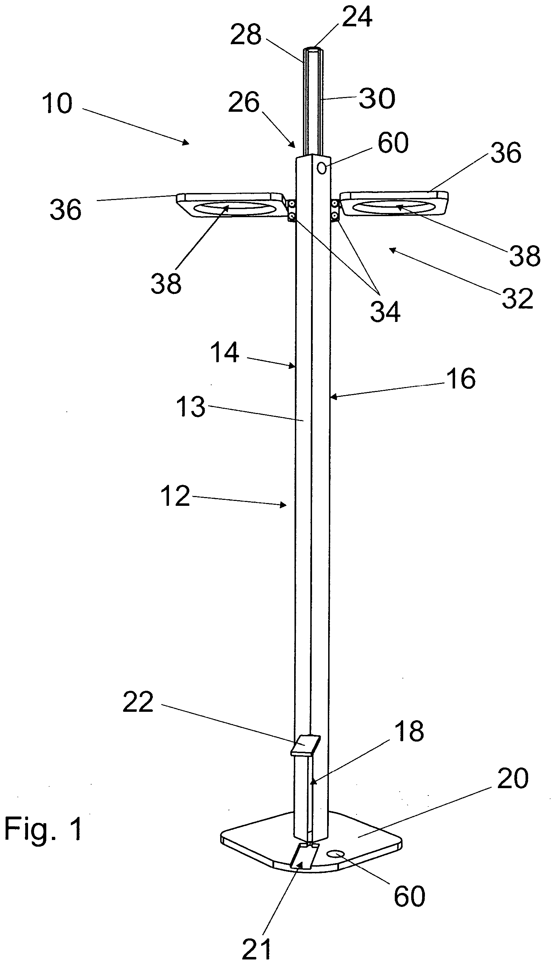

Figur 1 zeigt eine seitliche Ansicht einer bevorzugten Ausführungsform der erfindungsgemäßen Aufnahmevorrichtung 10 mit einem vertikal angeordneten Träger 12. Die nachfolgend verwendeten Begriffe oben, unten, links und rechts beziehen sich auf die Vorrichtung und ihre Elemente entsprechend der Raumlage der Aufnahmevorrichtung 10 im Betrieb. Die Begriffe entsprechen dabei den Richtungen in den Figuren. Der Träger 12 ist hier als Profilrohr 13 ausgeführt, mit zwei sich gegenüberliegenden Kanten 14 und 16. Weiter hat der Träger 12 in seinem unteren Ende, also in Figur 1 unten, eine schlitzförmige Öffnung 18. Der Träger 12 ist senkrecht auf einer Bodenplatte 20 befestigt. Weiter umfasst die Vorrichtung 10 einen Fußhebel 22. Dieser ist zumindest teilweise im Träger 12 bzw. im Profilrohr 13 angeordnet und erstreckt sich senkrecht zu Träger 12 bzw. Profilrohr 13 durch die Öffnung 18 aus dem Träger 12 bzw. Profilrohr 13 heraus. Die Bodenplatte 20 umfasst eine zum Fußhebel komplementäre Ausnehmung 21. Weiter umfasst die Aufnahmevorrichtung 10 einen per Hand bedienbaren manuellen Hebel 24, welcher sich aus einer Öffnung 26 am oberen Ende des Trägers 12 heraus erstreckt. Der manuelle Hebel 24 ist mit zwei Längsstäben 28 und 30 verbunden, die sich parallel zum Träger 12 erstrecken und teilweise in diesen hineinragen. Weiter umfasst die Aufnahmevorrichtung 10 einen Schlitten 32, der verfahrbar an dem Träger 12 angeordnet ist. Dabei umfasst der Schlitten 32 zwei paar Laufrollen 34, die jeweils auf einer der gegenüberliegenden Kanten 14 und 16 des Trägers abrollen, wobei jeweils zwei Laufrollen 34 untereinander angeordnet sind. Die Laufrollen 34 sind dabei bevorzugt mit einer konkaven und/oder zu den Kanten 14, 16 komplementär ausgeführten, profilierten Lauffläche versehen. Dadurch verhindern sie ein Verdrehen des Schlittens 32 am Träger 12 und gewähren eine reibungsarme und gerade Bewegung des Schlittens 32 entlang der Kanten 14 und 16.

Weiter umfasst der Schlitten 32 zwei hier z.B. identische Halter 36. Diese weisen jeweils eine zu einem Futternapf passende Öffnung 38 auf, in die beispielsweise ein nicht dargestellter Futternapf eingesetzt werden kann. Die Halter 36 sind stegartig miteinander verbunden und wie die Laufrollen 34 jeweils an gegenüberliegenden Längsseiten des Trägers 12 angeordnet und somit den Kanten 14, 16 zugeordnet.

Der Schlitten 32, das Fußpedal 22 und der Hebel 24 sind in Figur 1 in ihrer jeweiligen oberen Endposition angeordnet. Diese Position entspricht hinsichtlich der Stellung des Fußpedals 22 dabei dem oberen Ende der schlitzförmigen Öffnung 18 und für den Hebel 24 der maximalen Erstreckung nach oben aus dem Träger 12 heraus. Für den Schlitten 32 entspricht diese Position einer ersten oberen Endposition am Träger 12. In dieser Stellung sind die in die Halter 36 einsetzbaren Futternäpfe oder dgl. Behälter auch für körperlich eingeschränkte Personen einfach erreichbar und können einfach gereinigt oder befüllt werden.

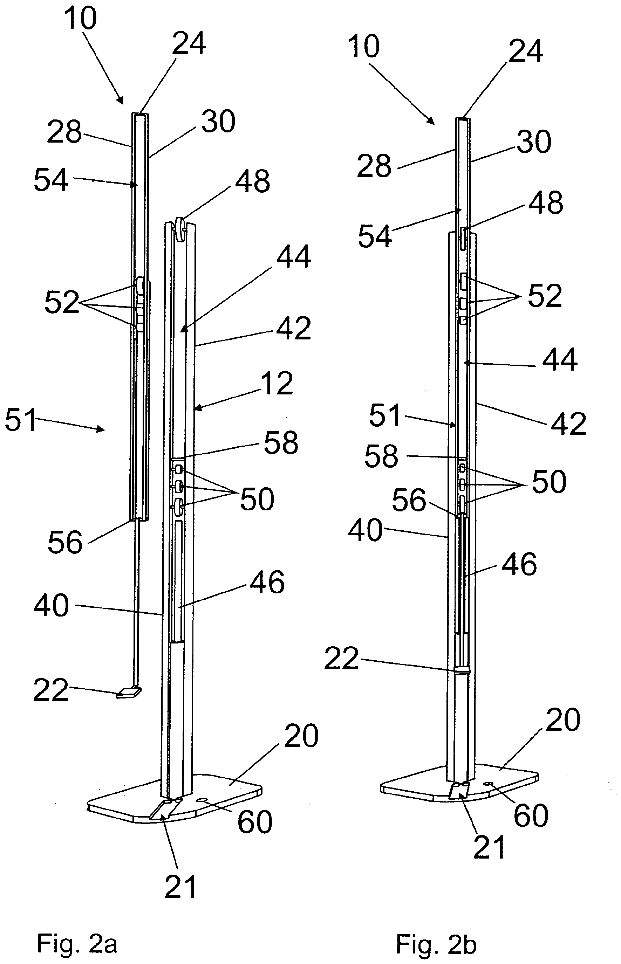

Figur 2a zeigt die Ausführungsform gemäß Figur 1 ohne das äußere Profilrohr 13 des Trägers 12. Der Träger 12 umfasst weiter zwei Profilstäbe 40 und 42 welche senkrecht im Inneren des Profilrohrs 13 verlaufen und ein etwa dreieckiges Profil aufweisen. Die Profilstäbe 40, 42 sind dabei derart angeordnet, dass sie sich mit jeweils einer Fläche gegen überliegen und zwischen sich einen Raum 44 umgrenzen. Dabei zeigt jeweils eine Kante der Profilstäbe 40, 42 zu den hier nicht dargestellten Kanten 14 und 16 des Vierkantrohrs 13 und liegt damit innen an einer Kante des Profilrohrs 13 an. Im unteren Bereich des Raums 44 ist eine Gasdruckfeder 46 angeordnet. Diese Gasdruckfeder 46 ist im abgebildeten Zustand vollständig entspannt hat damit ihre maximale Erstreckung in Längsrichtung des Trägers 12. Am oberen Ende des Raums 44 ist zwischen den Stäben 40, 42 eine Umlenkrolle 48 drehbar auf einer Achse quer zur Längsrichtung ds Trägers 12 angeordnet. Die Umlenkrolle 48 ist dabei in Laufrichtung parallel zum Träger 12 angeordnet. Kurz oberhalb des oberen Endes der Gasdruckfeder 46 sind im Raum 44 drei Flaschenzugrolten 50 vorgesehen, die mit abnehmendem Durchmesser von unten nach oben übereinander angeordnet sind. Die Flaschenzugrollen 50 sind auf Achsen quer zur Längsrichtung des Trägers 12 drehbar und in Laufrichtung ebenfalls parallel zum Träger 12 angeordnet. Über den Flaschenzugrollen 50 ist ein Querstab 58 angeordnet, der sich zwischen den Stäben 40, 42 durch den Raum 44 erstreckt und die Profilstäbe 40, 42 verbindet.

Zur besseren Übersicht ist ein Teil der Vorrichtung in Figur 2a explosionsartig gezeichnet neben dem Träger 12 angeordnet. Dieser bewegliche Innenteil 51 umfasst oben den Hebel 24, unten das Fußpedal 22 und die Längsstäbe 28 und 30. Diese begrenzen zwischen sich einen Raum 54. Zwischen den Längsstäben 28 und 30 sind im Raum 54 ebenfalls drei Flaschenzugrollen 52 vorgesehen, die mit zunehmendem Durchmesser von unten nach oben übereinander und in Laufrichtung parallel zu den Stäben 28, 30 bzw. dem Träger 12 angeordnet sind. Die Längsstäbe 28, 30 sind an ihrem unteren Ende durch ein Querelement 56 verbunden, von welchem aus sich das Fußpedal 22 nach unten erstreckt. Dieses umfasst einen oberen Längsteil welcher parallel zu den Stäben 28, 30, bzw. dem Träger 12 ist und einen unteren Querteil welcher senkrecht dazu ist.

Das in Figur 2a neben dem Träger 12 dargestellte, bewegliche Innenteil 51 ist in Figur 2b in seiner in das Profilrohr 13 eingebauten Position dargestellt. Hierbei sind Stäbe 28 und 30 zwischen den Profilstäben 40 und 42 angeordnet. In der dargestellten Position ist der bewegliche Innenteil 51 in seiner oberen Endposition angeordnet, diese entspricht der in Figur 1 dargestellten Position. Die Stäbe 28 und 30 sind dabei derart angeordnet, dass sie in Figur 2a vor den Achsen der Umlenkrolle 48, der Flaschenzugrollen 50 und dem Querstab 58 verlaufen, dies entspricht der Richtung, in die sich das Ende des Fußpedals 22 aus dem Träger 12 heraus erstreckt. Diese Anordnung ist allerdings nicht zwingend erforderlich, je nach Ausführungsform können die Stäbe 28 und 30 auch hinter den genannten Teilen verlaufen. Das Querelement 56 ist in der dargestellten Position des beweglichen Innenteils 51 oberhalb des oberen Endes der Gasdruckfeder 46 angeordnet und kann auf diese einwirken. Eine Bewegung des beweglichen Innenteils 51 nach unten hat deshalb eine Komprimierung der Gasdruckfeder 46 und den Aufbau einer Federspannung zur Folge, eine Bewegung des beweglichen Innenteils 51 nach oben bewirkt das Gegenteil. Das bewegliche Innenteil 51 ist über ein hier nicht dargestelltes Antriebselement 62 mit dem hier ebenfalls nicht dargestellten Schlitten 32 verbunden.

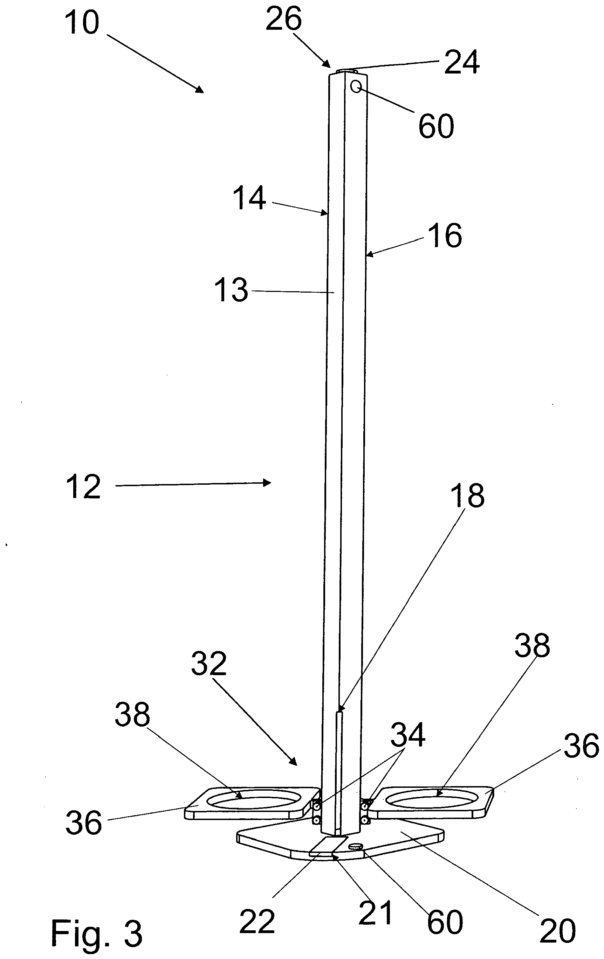

Figur 3 zeigt die in Figur 1 dargestellte Ausführungsform der Aufnahmevorrichtung 10 in einer seitlichen Ansicht. Der Schlitten 32 ist hierbei in seiner unteren Endposition dargestellt, welche seiner zweiten Position entspricht. In dieser unteren Endposition befinden sich die Halter 36 kurz oberhalb der Bodenplatte 20 und das Fußpedal 22 ist in einer Ausnehmung 21 in der Bodenplatte 20 eingesenkt. Dies ermöglicht eine optische ansprechende Ausführung der Aufnahmevorrichtung 10 und dient gleichzeitig als Begrenzung für eine Bewegung des beweglichen Innenteils 51 und des mit dem beweglichen Innenteil 51 über ein hier nicht dargestelltes Antriebselement 62 verbundenen Schlittens 32 nach unten. In dieser Stellung sind die in die Halter 36 einsetzbaren Futternäpfe oder dgl. Behälter für kleinere Tiere unproblematisch zu erreichen.

Weiter ist in Figur 3 ein Verriegelungselement 60 dargestellt. Dieses ist z.B. als im Rohr 13 eingesenkter gefederter Knopf ausgeführt, welcher in den beweglichen Innenteil 51 eingreift und diesen damit bei Verriegelung an einer Bewegung hindert. Eine hier nicht dargestellte, alternative Ausführung eines Verriegelungsmittel kann aber auch einen an der Bodenplatte 20 ausgeführten Riegel umfassen, der das bewegliche Innenteil 51 über eine Verriegelung des Fußpedals 22 verriegelt. Die in Figur 2a und 2b dargestellte Gasdruckfeder 46 ist in dieser Position des beweglichen Innenteils 51 maximal gespannt und drückt das bewegliche Innenteil 51 nach oben. Ohne Krafteinwirkung durch einen Nutzer auf das bewegliche Innenteil 51 auf den Hebel 24, das Fußpedal 22 oder durch das Verriegelungselement 60, drückt die Gasdruckfeder 46 das bewegliche Innenteil 51 nach oben in seine erste obere Position wie in Figur 1 und 2a, 2b dargestellt.

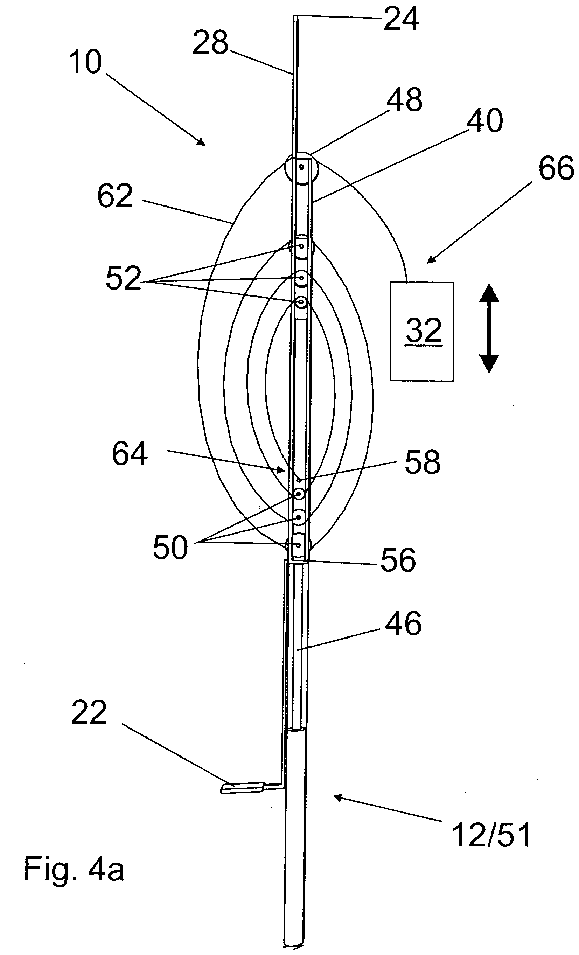

Figur 4a zeigt einen Längsschnitt durch einen Ausschnitt der Ausführungsform aus Figur 2b. Der in Figur 2a und 2b dargestellte Profilstab 42 ist ebenso wie der Längsstab 30 aus Gründen der Übersichtlichkeit nicht dargestellt. Weiterhin ist in Figur 4a ein biegsames Antriebselement 62 dargestellt. Dieses kann beispielsweise als Seil, Kette, Riemen oder dergleichen ausgeführt sein. Das Antriebselement 62 ist hier in seiner Anordnung nur schematisch dargestellt. Das erste Ende 64 des Antriebselements 62 ist an dem unteren festen Querstab 58 befestigt. Dieser bildet somit einen Festlegungspunkt für das Antriebselement 62. Das Antriebselement 62 wird ausgehend vom Querstab 58 nach oben geführt und um die unterste und kleinste der oberen Flaschenzugrollen 52 umgelenkt. Anschließend wird es wieder nach unten zur kleinsten der unteren Flaschenzugrollen 50 geführt, um diese herum gelenkt und wieder nach oben zur mittleren der oberen Flaschenzugrollen 52. Weitergehend wird das Antriebselement 62 in gleicher Weise abwechselnd um die im Durchmesser zunehmenden Flaschenzugrollen 50 und 52 gelenkt. Nach Umlenkung um die unterste und größte Flachenzugrolle 50 wird das Antriebselement 62 zum oberen Ende des Trägers 12 zur Umlenkrolle 48 geführt und umgelenkt. Das hier freie Ende 66 wird wieder nach unten zum schematisch dargestellten Schlitten 32 geführt und an diesem befestigt. Der Schlitten 32 ist dabei in seiner ersten oberen Endposition angeordnet (siehe Figur 1), zur Übersichtlichkeit aber neben dem Träger 12 dargestellt. Die Erfindung ist dabei selbstverständlich nicht auf die dargestellte Anzahl der Flacshenzugrollen 50 und 52 beschränkt.

Die Flaschenzugrollen 50, 52 und die Umlenkrolle 48 wirken zusammen als Übertragungsmittel für die Bewegung des Schlittens 32. Eine nach unten gerichtete Kraft auf das Fußpedal 22 und/oder den Hebel 24 durch einen Nutzer drückt den beweglichen Innenteil 51 und damit die Flaschenzugrollen 52 nach unten. Durch diese dem Verstellweg entsprechende Bewegung verlängert sich der Abstand zwischen den Flaschenzugrollen 50 und 52 entsprechend dem Verstellweg. Durch die mehrfache Umlenkung des Antriebselements 62 wird der Abschnitt des Antriebselements 62, der dabei um die Flaschenzugrollen 50, 52 läuft, gegenüber dem freien Abschnitt am Ende 66 des Antriebselements 62 deutlich größer. Da das Ende 64 des Antriebselements 62 am Querstab 58 festgelegt ist, wird der Richtung Ende 66 angeordnete Abschnitt des Antriebselements 62 um die Flaschenzugrollen 50 und 52 umgelenkt. Dementsprechend wird das Ende 66 in Richtung der Umlenkrolle 48 bewegt, wodurch der Schlitten 32 nach oben verfahren wird.

Der Verfahrweg entspricht dabei dem mehrfachen des Verstellwegs von Fußpedal 22 oder Hebel 24. Hierdurch kann durch eine kurze Verstellbewegung des beweglichen Innenteils 51, bzw. der für den Nutzer bedienbaren Teile Fußpedal 22 und Hebel 24, ein deutlich verlängerter Verfahrweg des Schlittens 32 erreicht werden. Bei einem vollständigen Absenken des beweglichen Innenteils 51 entlang des Verstellwegs wird der Schlitten 32 in seine in Figur 1 dargestellte erste obere Endposition verfahren. Diese Ausführungsform ermöglicht es dem Nutzer, beispielsweise in den Haltern 36 (siehe Figur 1) aufgenommenen Näpfe aus der Reichweite eines Haustiers nach oben zu verfahren und zu befüllen, ohne sich bücken zu müssen.

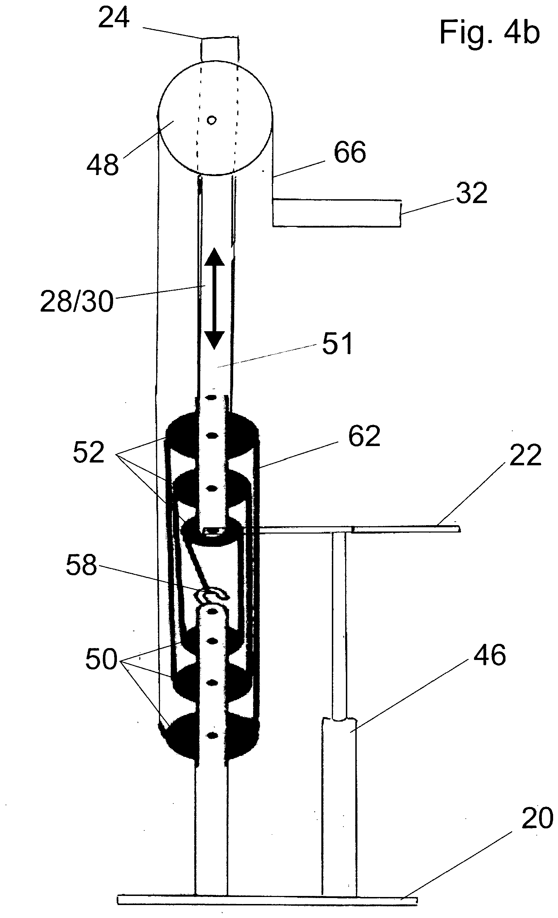

Die Figur 4b zeigt den vorstehend schon erläuterten Aufbau des Übertragungsmittels zur Verlängerung der Bewegung des Schlittens 32 relativ zur Verstellung der Verstellmittel 22, 24. Hierbei ist in sehr schematischer und abstrahierender Weise der Aufbau des Übertragungsmittels aus Flaschenzugrollen 50, 52, Umlenkrolle 48 und Antriebselement 62 sowie das Zusammenwirken mit der Gasdruckfeder 46 und dem Schlitten 32 zu erkennen. Das Betätigen des Fußhebels 22 bewegt den beweglichen oberen Teil des Flaschenzugs mit den Flaschenzugrollen 52, den Längsstäben 28 und 30 und der Umlenkrolle 48 nach unten, wobei das Antriebselement 62 über die Flaschenzugrollen 50, 52 eine kurze Bewegung des Fußhebels 22 in eine verlängerte Bewegung des Schlittens 32 nach unten umsetzt, wie dies vorstehend beschrieben wurde Gleichzeitig wird die Gasdruckfeder 46 komprimiert und dadurch gespannt, und dadurch kann die Rückhubbewegung des Schlittens 32 allein durch die Kraft der Gasdruckfeder 46 hervorgerufen werden, wenn die Betätigung des Fußhebels 22 aufgehoben wird oder eine hier nicht dargestellte Verriegelungseinrichtung 60 freigegeben wird.

Durch die Bewegung des beweglichen Innenteils 51 nach unten greift das Querelement 56 an der Gasdruckfeder 46 an und diese wird gespannt und eine potentielle Energie in ihr gespeichert. Diese Gasdruckfeder 46 ist derart ausgeführt, dass sie, ohne Krafteinwirkung durch einen Nutzer wie oben beschrieben und ohne Verriegelung des Innenteils 51 wie zu Figur 3 beschrieben, an den beweglichen Innenteil 51 über das Querelement 56 angreift. Dieser Angriff drückt das bewegliche Innenteil 51 in die entgegengesetzte Richtung nach oben und verkürzt dadurch den Abstand zwischen den Flaschenzugrollen 50 und 52. Durch die Befestigung des Antriebselements 62 am oberen Querstab 58 und das Gewicht des Schlittens 32 auf das Ende 66 des Antriebselements 62, wird der freiwerdende Abschnitt des Antriebselements 62 vom Schlitten 32 nach unten gezogen und dieser verfährt nach unten. Die Gasdruckfeder 46 ist dabei derart ausgeführt, dass sie in ihrer maximalen Erstreckung den Schlitten 32 in seine zweite untere Endposition verfahren hat. Somit wird eine automatisierte Rückstellung des Schlittens 32 erreicht.

Nach einer hier nicht dargestellten Ausführungsform übt die Gasdruckfeder 46 eine zur beschriebenen Ausführungsform entgegengesetzte Kraft auf das Innenteil 51 aus. Ohne Verriegelung oder Einwirkung eines Nutzers wird der Innenteil 51 nach unten gezogen, wodurch der Schlitten 32 in seine obere Endposition verfahren wird.

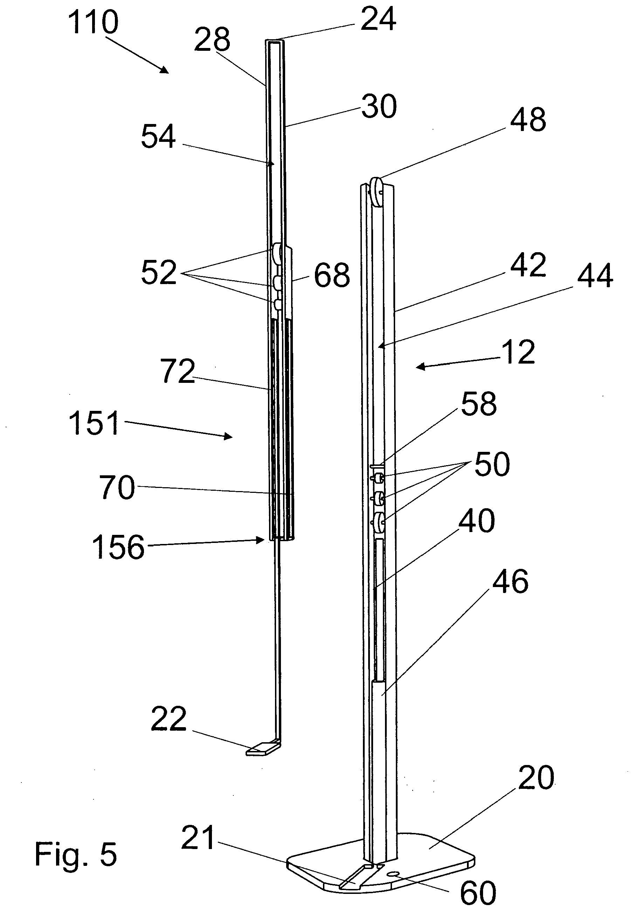

Figur 5 zeigt eine Ausführungsform der Erfindung, die der in Figur 1 bis 4 dargestellten Ausführungsform weitestgehend entspricht. Die Aufnahmevorrichtung 110 unterscheidet sich dabei in der Ausführung des Innenteils 151. Dieser umfasst dabei einen Kasten 68, der durch einen Abschnitt der Längsstäbe 28 und 30 sowie zwei weitere Längsstäbe 70 und 72 gebildet wird, die im Rechteck zueinander angeordnet sind. Die Längsstäbe 70, 72 erstrecken sich ausgehend von der Höhe der oberen Flaschenzugrollen 52 nach unten bis zum Querelement 156 und sind mit diesem verbunden. Die Flaschenzugrollen 52 sind auf gleicher Höhe zu der vorher beschriebenen Ausführungsform angeordnet, dahingegen aber etwas versetzt, sodass sich ihre Achsen quer in der Mitte des Kastens 68 erstrecken. Diese Ausführungsform ermöglicht eine stabilere Führung des Innenteils 151 im Träger 12, bzw. im hier nicht dargestellten Trägerrohr 13.

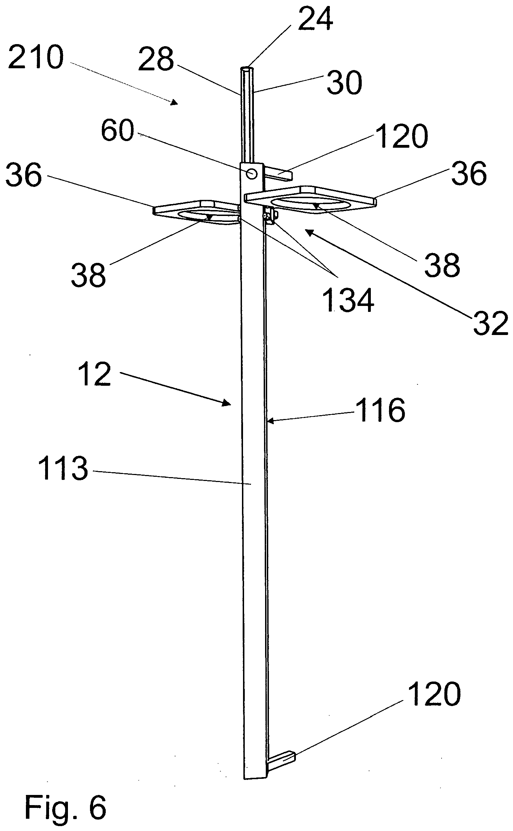

Figur 6 zeigt eine Ausführungsform der Erfindung, die der in Figur 1 bis 4 dargestellten Ausführungsform weitestgehend entspricht. Dabei ist der Träger 12 der Aufnahmevorrichtung 210 nicht an einer Bodenplatte 20 befestigt, sondern mittels zwei Wandhalterungen 120 an einer nicht dargestellten Wand befestigt. Auch ist als Verstellmittel nur der Hebel 24 ausgeführt, das Fußpedal ist nicht vorhanden. Das Trägerrohr 113 umfasst an seinen Kanten 114 (nicht sichtbar) und 116 abgeflachte Bereiche, auf denen der Schlitten 32 mittels jeweils ein paar Laufrollen 134 läuft. Diese Laufrollen 134 weisen beispielsweise eine flache komplementäre Lauffläche auf.

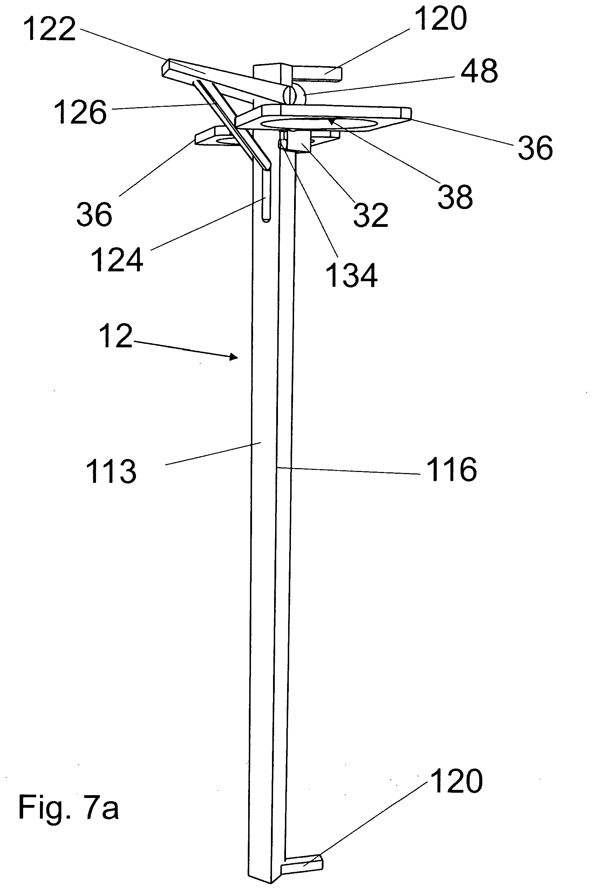

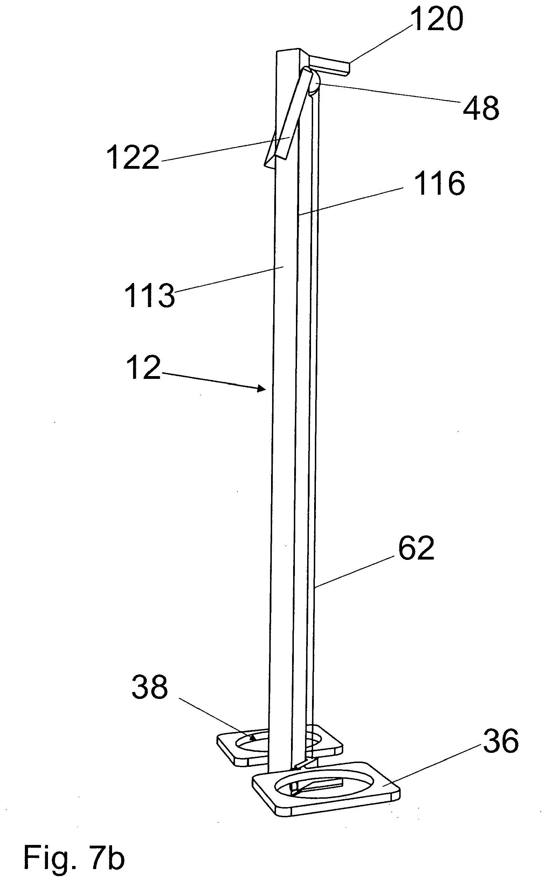

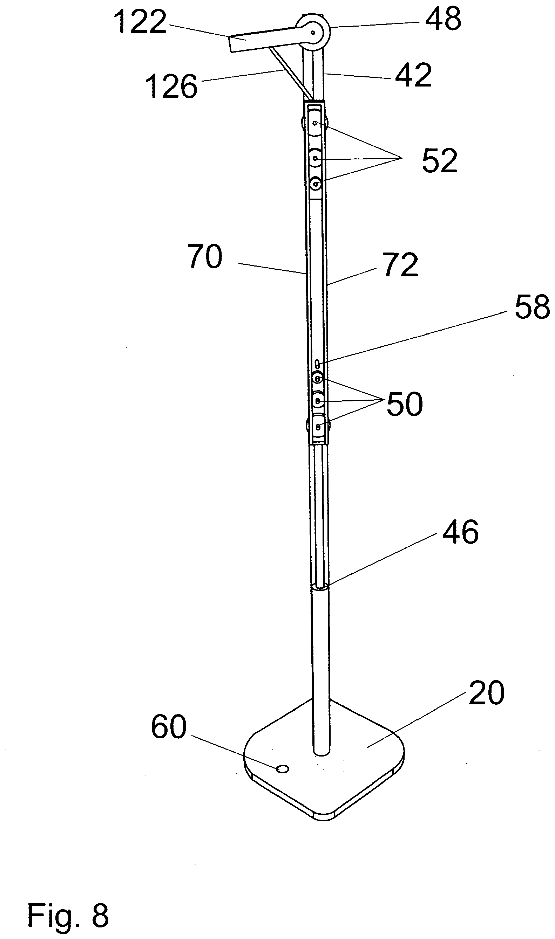

In den Figuren 7a, 7b und 8 ist eine weitere Ausgestaltung der Aufnahmevorrichtung 10 dargestellt, in der die Betätigung des Schlittens 32 über ein im oberen Endbereich des Trägers 12 angeordnete Hebelanordnung aus einem kippbaren Hebel 122 und einen hebelförmigen Kraftübertrager 126 erfolgt. Der kippbare Hebel 122 ist drehbar am oberen Ende des Trägers 12 angeordnet und betätigt bei seiner Kippbewegung einen einerseits an dem Hebel 122 angelenkten und andererseits auf die Längsstäbe 70, 72 wirkenden Kraftübertrager 126, wodurch der Kraftübertrager 126 über eine schlitzartige Öffnung 124 in wie schon beschriebener Weise auf den beweglichen Innenteil 51 mit den flaschenzugartig wirkenden Rollen 50, 52 wirkt und diesen beweglichen Innenteil 51 entlang des Trägers 12 verschiebt. Die Betätigung des Schlittens 32 über den kippbaren Hebel 122 hat für Personen, die eine Betätigung mittels Fußhebel, wie in den Figuren 1 bis 5 dargestellt, nicht ausführen können, Vorteile, da die Bedienung hier etwa mittels der Hand in griffgünstiger Höhe erfolgen kann. In der Figur 7a ist der Schlitten 32 in seiner oberen Endstellung abgebildet, in der Figur 7b in der unteren Endstellung, wobei dieser lange Verstellweg des Schlittens 32 in schon beschriebener Weise durch die Übertragung nur einen kurzen Kippweg des Hebels 122 erfordert.

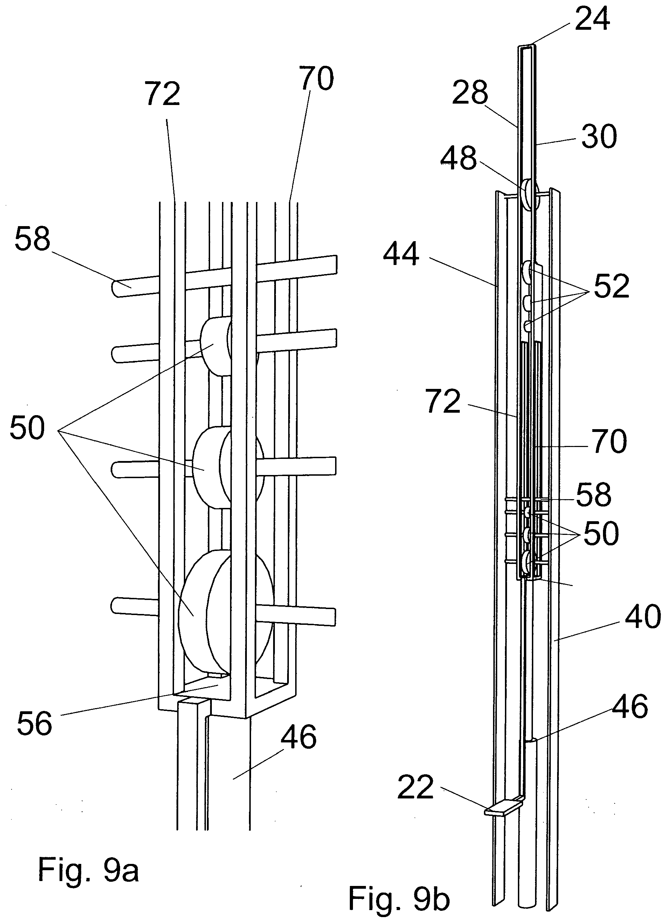

In den Figuren 9a und 9b ist eine vergrößerte Darstellung der beweglichen Anteile der Aufnahmevorrichtung 10 in zwei Ansichten zu erkennen, die ansonsten der Darstellung in den Figuren 2 und 4a, 4b entspricht und dort ausführlich beschrieben wurde.

Die in den Figuren beschriebenen Ausführungsformen können selbstverständlich, soweit technisch möglich, in beliebiger Weise miteinander kombiniert werden und sind nicht auf ihre jeweiligen Merkmale beschränkt.

### Sachnummernliste

- 10: - Aufnahmevorrichtung
- 12: - Träger
- 13: - Profilrohr
- 14: - Kanten Profilrohr
- 16: - Kanten Profilrohr
- 18: - schlitzförmige Öffnung
- 20: - Bodenplatte
- 21: - Ausnehmung
- 22: - Fußhebel
- 24: - Hebel
- 26: - Öffnung
- 28: - Längsstab
- 30: - Längsstab
- 32: - Schlitten
- 34: - Laufrollen
- 36: - Halter
- 38: - Öffnung
- 40: - Profilstab
- 42: - Profilstab
- 44: - umgrenzter Raum
- 46: - Gegenkraftmittel, Gasdruckfeder
- 48: - Umlenkrolle
- 50: - Flaschenzugrolle
- 51: - beweglicher Innenteil
- 52: - Flaschenzugrolle
- 54: - umgrenzter Raum
- 56: - Querelement
- 58: - Querstab
- 60: - Verriegelungselement
- 62: - biegsames Antriebselement
- 64: - Ende Antriebselement
- 66: - Ende Antriebselement
- 68: - Kasten
- 70: - Längsstab
- 72: - Längsstab
- 110: - Aufnahmevorrichtung
- 113: - Trägerrohr
- 114: - Kanten Profilrohr
- 116: - Kanten Profilrohr
- 120: - Wandhalterung
- 122: - Hebel
- 124: - schlitzförmige Öffnung
- 126: - hebelartiger Kraftübertrager
- 134: - Laufrolle
- 151: - beweglicher Innenteil
- 156: - Querelement
- 210: - Aufnahmevorrichtung

## Patentansprüche

1. Eine höhenverstellbare Aufnahmevorrichtung (10, 110, 210) für Tiernahrung, insbesondere zur Aufnahme von Behältern für Tiernahrung, umfassend
- einen Träger (12),
- einen an dem Träger (12) vertikal verstellbaren Schlitten (32) mit zumindest einem Halter (36) für Tiernahrung in einem Napf, einer Flasche oder dgl.,
- mechanische Verstellmittel (22, 24, 51, 48) zum Bewegen des Schlittens (32) entlang des Trägers (12),
**dadurch gekennzeichnet, dass**
eine Betätigung der mechanischen Verstellmittel (22, 24, 51, 48) entlang eines Verstellwegs ein Bewegen des Schlittens (32) in eine erste Richtung entlang eines Verfahrwegs an dem Träger (12) bewirkt, wobei zwischen Verstellmittel (22, 24, 51, 48) und Schlitten (32) wirkende Übertragungsmittel (50, 52, 62) dabei den Verfahrweg des Schlittens (32) relativ zum Verstellweg der Verstellmittel (22, 24, 51, 48) verlängern, und
die Aufnahmevorrichtung (10, 110, 210) Gegenkraftmittel (46) zum Bewegen des Schlittens (32) entlang des Trägers (12) aufweist, durch die der Schlitten (32) in eine zweite Richtung entgegengesetzt zu der ersten Richtung aufgrund der Betätigung der Verstellmittel (22, 24, 51, 48) bewegbar ist.

2. Eine höhenverstellbare Aufnahmevorrichtung (10, 110, 210) für Tiernahrung, insbesondere zur Aufnahme von Behältern für Tiernahrung, umfassend
- einen Träger (12),
- einen an dem Träger (12) vertikal verstellbaren Schlitten (32) mit zumindest einem Halter (36) für Tiernahrung in einem Napf, einer Flasche oder dgl.,
- mechanische Verstellmittel (22, 24, 51, 48) zum Bewegen des Schlittens (32) entlang des Trägers (12),
**dadurch gekennzeichnet, dass**
eine Betätigung der mechanischen Verstellmittel (22, 24, 51, 48) entlang eines Verstellwegs in eine erste Verstellrichtung ein Bewegen des Schlittens (32) in eine erste Richtung entlang eines Verfahrwegs an dem Träger (12) bewirkt, und
eine Betätigung der mechanischen Verstellmittel (22, 24, 51, 48) entlang des Verstellwegs in eine zweite Verstellrichtung ein Bewegen des Schlittens (32) in eine zweite Richtung entlang des Verfahrwegs an dem Träger (12) bewirkt,
wobei zwischen Verstellmittel (22, 24, 51, 48) und Schlitten (12) wirkende Übertragungsmittel (50, 52, 62) dabei jeweils den Verfahrweg des Schlittens (32) relativ zum Verstellweg der Verstellmittel (22, 24, 51, 48) verlängern.

3. Aufnahmevorrichtung (10, 110, 210) nach Anspruch 1, **dadurch gekennzeichnet, dass** die Gegenkraftmittel (46) den Schlitten (32) in eine erste Position entlang des Trägers (12), vorzugsweise in eine vertikal obere Endposition an dem Träger (12), bewegen und die Betätigung der mechanischen Verstellmittel (22, 24, 51, 48) den Schlitten (32) entlang des Trägers (12) in eine zweite Position, vorzugsweise in eine vertikal untere Endposition an dem Träger (12), bewegt.

4. Aufnahmevorrichtung (10, 110, 210) nach einem der Ansprüche 1, 2 oder 3, **dadurch gekennzeichnet, dass** die Verstellmittel (22, 24, 51, 48) durch eine von einer Bedienperson aufbringbare mechanische Verstellkraft beaufschlagbar sind, die den Schlitten (32) in die erste Richtung entlang des Verfahrwegs an dem Träger (12) bewegt.

5. Aufnahmevorrichtung (10, 110, 210) nach einem der Ansprüche 1, 3 oder 4, **dadurch gekennzeichnet, dass** die auf die mechanischen Verstellmittel (22, 24, 51, 48) ausgeübte Verstellkraft bei der Bewegung des Schlittens (32) in die erste Richtung entlang des Verfahrwegs gleichzeitig die Energie für die Gegenkraftmittel (46) bereitstellt, die anschließend zum Bewegen des Schlittens (32) entlang des Trägers (12) in die Gegenrichtung durch die Gegenkraftmittel (46) nutzbar ist.

6. Aufnahmevorrichtung (10, 110, 210) nach einem der Ansprüche 1, 3, 4 oder 5,
**dadurch gekennzeichnet, dass** die Gegenkraftmittel (46) einen Gegenkraftmittelweg aufweisen, der dem Verstellweg der Verstellmittel (22, 24, 51, 48) entspricht, und die Übertragungsmittel (50, 52, 62) den Verfahrweg des Schlittens (32) relativ zum Gegenkraftmittelweg verlängern, wenn der Schlitten (32) in die Gegenrichtung bewegt wird.

7. Aufnahmevorrichtung (10, 110, 210) nach einem der Ansprüche 1, 3 bis 6, **dadurch gekennzeichnet, dass** die Gegenkraftmittel (46) einen Gegenkraftmittelweg aufweisen, der dem Verfahrweg des Schlittens (32) entspricht.

8. Aufnahmevorrichtung (10, 110, 210) nach einem der Ansprüche 1, 3 bis 7, **dadurch gekennzeichnet, dass** die Gegenkraftmittel (46) Federmittel und/oder Gewichte umfassen.

9. Aufnahmevorrichtung (10, 110, 210) nach Anspruch 2, **dadurch gekennzeichnet, dass** die Betätigung der Verstellmittel (22, 24, 51, 48) in die erste Verstellrichtung den Schlitten (32) in eine erste Position entlang des Trägers (12), vorzugsweise in eine vertikal obere Endposition an dem Träger (12), bewegt und die Betätigung der Verstellmittel (22, 24, 51, 48) in die zweite Verstellrichtung den Schlitten (32) entlang des Trägers (12) in eine zweite Position, vorzugsweise in eine vertikal untere Endposition an dem Träger (12), bewegt.

10. Aufnahmevorrichtung (10, 110, 210) nach einem der Ansprüche 2 oder 9, **dadurch gekennzeichnet, dass** die Verstellmittel (22, 24, 51, 48) durch eine von einer Bedienperson aufbringbare mechanische Verstellkraft beaufschlagbar sind, die den Schlitten (32) in die erste und/oder die zweite Richtung entlang des Verfahrwegs an dem Träger (12) bewegt.

11. Aufnahmevorrichtung (10, 110, 210) nach einem der vorstehenden Ansprüche, **dadurch gekennzeichnet, dass** die Verstellmittel (22, 24, 51, 48) und/oder die Gegenkraftmittel (46) über ein biegsames Antriebselement (62) und zumindest eine von dem biegsamen Antriebselement (62) umgreifbare Umlenkeinheit (48), insbesondere eine Umlenkrolle (48), auf den Schlitten (32) wirken.

12. Aufnahmevorrichtung (10, 110, 210) nach Anspruch 11, **dadurch gekennzeichnet, dass** das biegsame Antriebselement (62) ein Seil, eine Kette, einen Riemen oder dgl. aufweist.

13. Aufnahmevorrichtung (10, 110, 210) nach einem der Ansprüche 11 oder 12, **dadurch gekennzeichnet, dass** die Übertragungsmittel (50, 52, 62) flaschenzugartig ausgebildet sind und eine Mehrzahl an Umlenkrollen (50, 52) umfassen, um die das Antriebselement (62) verläuft.

14. Aufnahmevorrichtung (10, 110, 210) nach einem der vorstehenden Ansprüche, **dadurch gekennzeichnet, dass** die Verstellmittel (22, 24, 51, 48) ein Fußpedal (22) und/oder einen, vorzugsweise per Hand, betätigbaren Hebel (24) umfassen.

15. Aufnahmevorrichtung (10, 110, 210) nach einem der vorstehenden Ansprüche, **dadurch gekennzeichnet, dass** Verriegelungsmittel (60) den Schlitten (32) in zumindest einer Position, vorzugsweise in der vertikal unteren Endposition an dem Träger (12), feststellen, vorzugsweise indem die Verriegelungsmittel (60) auf die Verstellmittel (22, 24, 51, 48) einwirken.

16. Aufnahmevorrichtung (10, 110, 210) nach einem der vorstehenden Ansprüche, **dadurch gekennzeichnet, dass** die Verstellmittel (22, 24, 51, 48) und/oder die Gegenkraftmittel (46) und/oder die Übertragungsmittel (50, 52, 62) zumindest teilweise im Inneren des Trägers (12) angeordnet sind.

## Claims

1. A height-adjustable holding device (10, 110, 210) for animal food, in particular for holding containers for animal food, comprising
- a carrier (12),
- a carriage (32) vertically adjustable on the carrier (12) with at least one holder (36) for animal food in a bowl, a bottle or the like,
- mechanical adjusting means (22, 24, 51, 48) for moving the carriage (32) along the carrier (12),
**characterised in that**
actuation of the mechanical adjusting means (22, 24, 51, 48) along an adjustment path causes the carriage (32) to move in a first direction along a travel path on the carrier (12),
transmission means (50, 52, 62) acting between the adjusting means (22, 24, 51, 48) and the carriage (32) thereby extending the travel path of the carriage (32) relative to the adjustment path of the adjusting means (22, 24, 51, 48), and
the holding device (10, 110, 210) has counterforce means (46) for moving the carriage (32) along the carrier (12), by means of which the carriage (32) can be moved in a second direction opposite to the first direction as a result of the actuation of the adjusting means (22, 24, 51, 48).

2. A height-adjustable holding device (10, 110, 210) for animal food, in particular for holding containers for animal food, comprising
- a carrier (12),
- a carriage (32) vertically adjustable on the carrier (12) with at least one holder (36) for animal food in a bowl, a bottle or the like,
- mechanical adjusting means (22, 24, 51, 48) for moving the carriage (32) along the carrier (12),
**characterised in that**
actuation of the mechanical adjusting means (22, 24, 51, 48) along an adjustment path in a first adjustment direction causes the carriage (32) to move in a first direction along an travel path on the carrier (12), and
actuation of the mechanical adjusting means (22, 24, 51, 48) along the adjustment path in a second adjustment direction causes the carriage (32) to move in a second direction along the travel path on the carrier (12),
wherein transmission means (50, 52, 62) acting between adjusting means (22, 24, 51, 48) and carriage (12) thereby extend the travel path of the carriage (32) relative to the adjustment path of the adjusting means (22, 24, 51, 48).

3. Holding device (10, 110, 210) according to claim 1, **characterised in that** the counterforce means (46) move the carriage (32) into a first position along the carrier (12), preferably into a vertically upper end position on the carrier (12), and the actuation of the mechanical adjustment means (22, 24, 51, 48) moves the carriage (32) along the carrier (12) into a second position, preferably into a vertically lower end position on the carrier (12).

4. Holding device (10, 110, 210) according to one of claims 1, 2 or 3, **characterised in that** the adjusting means (22, 24, 51, 48) can be acted upon by a mechanical adjusting force which can be applied by an operator and which moves the carriage (32) in the first direction along the travel path on the carrier (12).

5. Holding device (10, 110, 210) according to one of claims 1, 3 or 4, **characterised in that** the adjusting force exerted on the mechanical adjusting means (22, 24, 51, 48) during the movement of the carriage (32) in the first direction along the travel path simultaneously provides the energy for the counterforce means (46), which can subsequently be used to move the carriage (32) along the carrier (12) in the opposite direction by the counterforce means (46).

6. Holding device (10, 110, 210) according to one of claims 1, 2, 3, 4 or 5, **characterised in that** the counterforce means (46) have a counterforce mean path which corresponds to the adjustment path of the adjusting means (22, 24, 51, 48), and the transmission means (50, 52, 62) extend the travel path of the carriage (32) relative to the counterforce means path when the carriage (32) is moved in the opposite direction.

7. Holding device (10, 110, 210) according to one of claims 1, 3 to 6, **characterised in that** the counterforce means (46) have a counterforce means path which corresponds to the travel path of the carriage (32).

8. Holding device (10, 110, 210) according to one of claims 1, 3 to 7, **characterised in that** the counterforce means (46) comprise spring means and/or weights.

9. Holding device (10, 110, 210) according to claim 2, **characterised in that** the actuation of the adjusting means (22, 24, 51, 48) in the first adjusting direction moves the carriage (32) into a first position along the carrier (12), preferably into a vertically upper end position on the carrier (12), and the actuation of the adjusting means (22, 24, 51, 48) in the second adjustment direction moves the carriage (32) along the carrier (12) into a second position, preferably into a vertically lower end position on the carrier (12).

10. Holding device (10, 110, 210) according to one of claims 2 or 9, **characterised in that** the adjusting means (22, 24, 51, 48) can be acted upon by a mechanical adjusting force which can be applied by an operator and which moves the carriage (32) in the first and/or the second direction along the travel path on the carrier (12).

11. Holding device (10, 110, 210) according to one of the preceding claims, **characterised in that** the adjusting means (22, 24, 51, 48) and/or the counterforce means (46) act on the carriage (32) via a flexible drive element (62) and at least one deflection unit (48), in particular a deflection roller (48), which can be embraced by the flexible drive element (62).

12. Holding device (10, 110, 210) according to claim 11, **characterised in that** the flexible drive element (62) comprises a cable, a chain, a belt or the like.

13. Holding device (10, 110, 210) according to one of claims 11 or 12, **characterised in that** the transmission means (50, 52, 62) are designed in the form of a pulley block and comprise a plurality of deflection pulleys (50, 52) around which the drive element (62) runs.

14. Holding device (10, 110, 210) according to one of the preceding claims, **characterised in that** the adjusting means (22, 24, 51, 48) comprise a foot pedal (22) and/or a lever (24) which can be actuated, preferably by hand.

15. Holding device (10, 110, 210) according to one of the preceding claims, **characterised in that** locking means (60) lock the carriage (32) in at least one position, preferably in the vertically lower end position on the carrier (12), preferably by the locking means (60) acting on the adjusting means (22, 24, 51, 48).

16. Holding device (10, 110, 210) according to one of the preceding claims, **characterised in that** the adjusting means (22, 24, 51, 48) and/or the counterforce means (46) and/or the transmission means (50, 52, 62) are arranged at least partially in the interior of the carrier (12).

## Revendications

1. Dispositif de réception (10, 110, 210) de nourriture pour animaux réglable en hauteur, en particulier pour la réception de contenants de nourriture pour animaux comprenant
- un support (12),
- un chariot (32) réglable verticalement au niveau du support (12) avec au moins un élément porteur (36) de nourriture pour animaux dans une écuelle, une bouteille ou similaires,
- des moyens de réglage (22, 24, 51, 48) mécaniques pour le déplacement du chariot (32) le long du support (12),
**caractérisé en ce que**
un actionnement des moyens de réglage (22, 24, 51, 48) mécaniques le long d'une course de réglage provoque un déplacement du chariot (32) dans un premier sens le long d'une course de déplacement au niveau du support (12), dans lequel des moyens de transmission (50, 52, 62) agissant entre les moyens de réglage (22, 24, 51, 48) et le chariot (32) prolongent la course de déplacement du chariot (32) par rapport à la course de réglage des moyens de réglage (22, 24, 51, 48) et
le dispositif de réception (10, 110, 210) présente des moyens de force antagoniste (46) pour le déplacement du chariot (32) le long du support (12), par lesquels le chariot (32) est mobile dans un second sens opposé au premier sens en raison de l'actionnement des moyens de réglage (22, 24, 51, 48).

2. Dispositif de réception (10, 110, 210) de nourriture pour animaux réglable en hauteur, en particulier pour la réception de contenants de nourriture pour animaux comprenant
- un support (12),
- un chariot (32) réglable verticalement au niveau du support (12) avec au moins un élément porteur (36) de nourriture pour animaux dans une écuelle, une bouteille ou similaires,
- des moyens de réglage (22, 24, 51, 48) mécaniques pour le déplacement du chariot (32) le long du support (12),
**caractérisé en ce que**
un actionnement des moyens de réglage (22, 24, 51, 48) mécaniques le long d'une course de réglage dans un premier sens de réglage provoque un déplacement du chariot (32) dans un premier sens le long d'une course de déplacement au niveau du support (12), et
un actionnement des moyens de réglage (22, 24, 51, 48) mécaniques le long de la course de réglage dans un deuxième sens de réglage provoque un déplacement du chariot (32) dans un deuxième sens le long de la course de déplacement au niveau du support (12),
dans lequel des moyens de transmission (50, 52, 62) agissant entre des moyens de réglage (22, 24, 51, 48) et le chariot (32) prolongent respectivement la course de déplacement du chariot (32) par rapport à la course de réglage des moyens de réglage (22, 24, 51, 48).

3. Dispositif de réception (10, 110, 210) selon la revendication 1, **caractérisé en ce que** les moyens de force antagoniste (46) déplacent le chariot (32) dans une première position le long du support (12), de préférence dans une position d'extrémité supérieure verticalement au niveau du support (12), et l'actionnement des moyens de réglage (22, 24, 51, 48) mécaniques déplace le chariot (32) le long du support (12) dans une seconde position, de préférence dans une position d'extrémité inférieure verticalement au niveau du support (12).

4. Dispositif de réception (10, 110, 210) selon l'une quelconque des revendications 1, 2 ou 3, **caractérisé en ce que** les moyens de réglage (22, 24, 51, 48) peuvent être alimentés par une force de réglage mécanique applicable par un opérateur qui déplace le chariot (32) dans le premier sens le long de la course de déplacement au niveau du support (12).

5. Dispositif de réception (10, 110, 210) selon l'une quelconque des revendications 1, 3 ou 4, **caractérisé en ce que** la force de réglage exercée sur les moyens de réglage (22, 24, 51, 48) mécaniques fournit lors du déplacement du chariot (32) dans le premier sens le long de la course de déplacement simultanément l'énergie pour les moyens de force antagoniste (46) qui peut ensuite être utilisée pour le déplacement du chariot (32) le long du support (12) dans le sens antagoniste par les moyens de force antagoniste (46).

6. Dispositif de réception (10, 110, 210) selon l'une quelconque des revendications 1, 3, 4 ou 5, **caractérisé en ce que** les moyens de force antagoniste (46) présentent une course de moyens de force antagoniste qui correspond à la course de réglage des moyens de réglage (22, 24, 51, 48) et les moyens de transmission (50, 52, 62) prolongent la course de déplacement du chariot (32) par rapport à la course de moyens de force antagoniste lorsque le chariot (32) est déplacé dans le sens antagoniste.

7. Dispositif de réception (10, 110, 210) selon l'une quelconque des revendications 1, 3 à 6, **caractérisé en ce que** les moyens de force antagoniste (46) présentent une course de moyens de force antagoniste qui correspond à la course de déplacement du chariot (32).

8. Dispositif de réception (10, 110, 210) selon l'une quelconque des revendications 1, 3 à 7, **caractérisé en ce que** les moyens de force antagoniste (46) comprennent des moyens de ressort et/ou des poids.

9. Dispositif de réception (10, 110, 210) selon la revendication 2, **caractérisé en ce que** l'actionnement des moyens de réglage (22, 24, 51, 48) déplace dans le premier sens de réglage le chariot (32) dans une première position le long du support (12), de préférence dans une position d'extrémité supérieure verticalement au niveau du support (12), et l'actionnement des moyens de réglage (22, 24, 51, 48) déplace dans le second sens de réglage le chariot (32) le long du support (12) dans une seconde position, de préférence dans une position d'extrémité inférieure verticalement au niveau du support (12).

10. Dispositif de réception (10, 110, 210) selon l'une quelconque des revendications 2 ou 9, **caractérisé en ce que** les moyens de réglage (22, 24, 51, 48) peuvent être alimentés par une force de réglage mécanique applicable par un opérateur qui déplace le chariot (32) dans le premier et/ou le second sens le long de la course de déplacement au niveau du support (12).

11. Dispositif de réception (10, 110, 210) selon l'une quelconque des revendications précédentes, **caractérisé en ce que** les moyens de réglage (22, 24, 51, 48) et/ou les moyens de force antagoniste (46) agissent par le biais d'un élément d'entraînement (62) flexible et au moins une unité de renvoi (48) pouvant être enveloppée par l'élément d'entraînement (62) flexible, en particulier un rouleau de renvoi (48), sur le chariot (32).

12. Dispositif de réception (10, 110, 210) selon la revendication 11, **caractérisé en ce que** l'élément d'entraînement (62) flexible présente un câble, une chaîne, une courroie ou similaires.

13. Dispositif de réception (10, 110, 210) selon l'une quelconque des revendications 11 ou 12, **caractérisé en ce que** les moyens de transmission (50, 52, 62) sont réalisés en tant que poulie et comprennent une pluralité de rouleaux de renvoi (50, 52), autour desquels s'étend l'élément d'entraînement (62).

14. Dispositif de réception (10, 110, 210) selon l'une quelconque des revendications précédentes, **caractérisé en ce que** les moyens de réglage (22, 24, 51, 48) comprennent une pédale de pied (22) et/ou un levier (24) actionnable de préférence à la main.

15. Dispositif de réception (10, 110, 210) selon l'une quelconque des revendications précédentes, **caractérisé en ce que** des moyens de verrouillage (60) bloquent le chariot (32) dans au moins une position, de préférence dans la position d'extrémité inférieure verticalement au niveau du support (12), de préférence **en ce que** les moyens de verrouillage (60) agissent sur les moyens de réglage (22, 24, 51, 48).

16. Dispositif de réception (10, 110, 210) selon l'une quelconque des revendications précédentes, **caractérisé en ce que** les moyens de réglage (22, 24, 51, 48) et/ou les moyens de force antagoniste (46) et/ou les moyens de transmission (50, 52, 62) sont agencés au moins partiellement à l'intérieur du support (12).
